# EUROPEAN PATENT SPECIFICATION

(11) **EP 0 887 117 B1**
(45) Date of publication and mention of the grant of the patent: **15.09.2004**
(21) Application number: 98111459.8
(22) Date of filing: 22.06.1998
(51) Int. Cl.: B05D 1/18

(54) **Fabrication of an organic thin film having orientation or structure controlled at a molecular level**
Verfahren zur Herstellung eines dünnen organischen Films mit kontrollierter Orientierung oder Strukturierung im Bereich molekularer Dimensionen
Procédé de fabrication d'un film mince à orientation ou structure orientée à un niveau moléculaire

(30) Priority: 23.06.1997 JP 16612397; 02.06.1998 JP 15332498
(43) Date of publication of application: 30.12.1998
(73) Proprietor: Japan Science and Technology Corporation, Kawaguchi-shi, Saitama-ken 332-0012 (JP); Seiko Instruments Inc., Chiba-shi, Chiba 261-8507 (JP)
(72) Inventor: Sakuhara, Toshihiko, Yachimata-shi, Chiba-ken (JP); Yau, Shueh-Lin, Sendai-shi, Miyagi-ken (JP); Kim, Youn-Geun, Chon-Buk J70-749 (KR); Yamada, Taro, Sendai-shi, Miyagi-ken (JP); Itaya, Kingo, Sendai-shi, Miyagi-ken (JP)
(74) Representative: Müller-Boré & Partner Patentanwälte

(56) References cited:
- EP-A- 0 417 541
- EP-A- 0 506 368
- EP-A- 0 729 793
- RON H ET AL: "ELECTROCHEMICAL CONTROL OF MONOLAYER SELF-ASSEMBLY" EXTENDED ABSTRACTS, ELECTROCHEMICAL SOCIETY. PRINCETON, NEW JERSEY, US, vol. 95/2, 1995, page 1333 XP000554001 ISSN: 0160-4619
- ROHWERDER M ET AL: "ADSORPTION OF SELF-ASSEMBLED MONOLAYERS OF MERCAPTAN ON GOLD" THIN SOLID FILMS, ELSEVIER-SEQUOIA S.A. LAUSANNE, CH, vol. 264, no. 2, 15 August 1995 (1995-08-15), pages 240-245, XP000525714 ISSN: 0040-6090

## Description

The present invention relates to a method of fabricating an orientation or structure-controlled organic thin film for use as a liquid-crystalline oriented film, a photo-electric transfer element, a nonlinear optical element, a sensor or the like.

Oriented organic films have been fabricated so far by a wet process using a liquid phase and a dry process in a vacuum atmosphere.

A casting method for forming a thin film by evaporation and diffusion of a solvent, an LB (Langmuir-Blodgett) method for forming a monomolecular film on an aqueous surface, a liquid epitaxy method for growing a crystal from a liquid phase to a thin film state, an electrolytical polymerization method for electrolytically polymerizing an organic substance on a surface of an electrode, an anodizing method for electrolytically forming an oxide film and an electrodeposition method for dispersedly depositing fine particles belong to the wet process.

A vacuum deposition method, an MBE (molecular beam epitaxy) method, a cluster ion beam method, a vacuum deposition method using an ion beam, a high-frequency ion plating method, a spattering method, a plasma polymerization method and a CVD (chemical vapor deposition) method belong to the dry process.

Among others, the LB method, the vacuum deposition method, the cluster ion beam method and the ion beam-assisted vacuum deposition method have the advantage of fabricating monomolecular films good of orientation. Ron et al.: "Electrochemical Control of Monolayer Self-Assembly", Extended abstracts, Electrochemical Society. Princeton, New Jersey, US, Volume 95/2, 1995, page 1333 describes a fabrication process for self-assembly membranes, wherein an Au-surface is used as a working electrode in an electrochemical cell to accelerate the self-assembly of long-chained alkyl thiols.

However, there are strict restrictions on a kind of an organic compound which can be formed to a monomolecular film good of orientation according to the conventional methods. For instance, the LB method necessarily uses an organic compound containing a hydrophilic group and a hydrophobic group in one molecule. In addition, there are strong demands for provision of highly-oriented organic monomolecular films in order to improve performance in such a use as a liquid-crystalline oriented film, a photo-electric transfer element, a nonlinear optical element or a sensor.

The present invention aims at fabrication of an organic film with high orientation while overcoming the aforementioned problems. The object of the present invention is reached by controlling orientation of an organic monomolecular film as well as structure of molecular arrays by adjusting a potential of a substrate which is immersed as an electrode in an electrolyte solution dissolving an. organic compound therein during adsorption of the dissolved molecule, wherein the organic compound is selected from the group consisting of aromatic hydrocarbon, carboxylic acid, phenol and N-containing heterocyclic compound and wherein the metallic substrate is a single crystalline plane.

According to the present invention, a metallic substrate is immersed as an electrode in an electrolyte solution dissolving an organic compound therein A potential in a hydrogen-generating region (a cathodic region) is applied to the metallic substrate, so that the surface of the metallic substrate is clarified with nascent hydrogen. The potential is then changed to such a value to hold electrochemical equilibrium between the organic compound and the metallic substrate. Hereby, the organic compound is adsorbed onto the metallic substrate and grown up to an organic monomolecular adsorption film.

The organic compound may be added to the electrolyte solution either before or after immersion of the metallic substrate in the electrolyte solution. A monomolecular film obtained in any case is good of orientation.

Combination of the metallic substrate with the above defined organic compound may be freely selected, as long as chemical adsorption occurs. For instance, an aromatic hydrocarbon, a carboxylic acid or a phenol may be used as the organic compound, when the metallic substrate is Pt or Rh. A benzene, a carboxylic acid or an N-containing heterocyclic compound may be used as the organic compound, when the metallic substrate is Cu or Ag. However, these combinations are merely examples but do not put any limitations on a scope of the present invention. The scope of the present invention shall be understood from the definition in the claims

Fig. 1 is an STM photograph which shows structure of molecular arrays in a benzene monomolecular film of (√21×√21) structure corresponding to a hexagonal lattice.

Fig. 2 is a graph which shows a current-potential curve in a 10 mM hydrofluoric solution in which a pure Rh piece having (111) single crystalline plane is immersed as a metallic substrate and to which a small amount of benzene is added.

Fig. 3 is an STM photograph which shows structure of molecular arrays in a benzene monomolecular film of (3×3) structure corresponding to a hexagonal lattice.

Fig. 4 is an STM photograph which shows structure of molecular arrays in a benzene monomolecular film of c(2√3×3) structure corresponding to an orthorhombic lattice.

Fig. 5 is an STM photograph which shows structure of molecular arrays in a naphthalene monomolecular film of (3√3×3√3) structure.

### DETAILED DESCRIPTION OF THE INVENTION

Development of STM (scanning tunnel microscope) in these days enables observation of various kinds of substances in an atomic or molecular field of view. Regarding organic monomolecular films, there have been issued many reports in which results of observation are used for fabrication of organic monomolecular films good of orientation.

. However, most of the reports refer to organic films fabricated by the dry process such as a vacuum deposition method, a cluster ion beam method or an ion beam-assisted vacuum deposition method. Such an organic film can be conserved only in a vacuum atmosphere.

A monomolecular organic film has such orientation structure controlled at a molecular level that supply of a constituent compound to a surface of a substrate is quantitatively continued. In this sense, a supply amount of the constituent compound and conditions of the substrate shall be precisely controlled for realizing predetermined structure of molecular arrays. However, it is extremely difficult to control the supply amount and conditions of the substrate at a molecular level.

According to the present invention, such difficulty is overcome by the control of a potential to be applied to a metallic substrate. The potential control is also effective for controlling orientation and/or structure of an organic film. The orientation and/or structure is also controlled by selected combination of the organic compound with the metallic substrate.

A metallic substrate is immersed as an electrode in an electrolyte solution to which an organic compound as defined above is added, and its potential is adjusted to hold electrochemical equilibrium between the metallic substrate and the organic compound. The organic compound is adsorbed onto a surface of the metallic substrate and grown up to a monomolecular film thereon.

The electrolyte solution may be an aqueous or organic solvent containing an electrolyte therein.

The metallic substrate is cleaned before fabrication of a monomolecular film, and then immersed in an acidic or alkaline solution dissolving an organic compound serving as a constituent of the monomolecular film therein. The organic compound may be added to the acidic or alkaline solvent after immersion of the metallic substrate.

Adsorption of the organic molecule would occur on the metallic substrate immersed as such. However, spontaneous adsorption is irregular. This kind of irregularity is inhibited, and an organic film good of orientation is fabricated as follows:

At first, a potential of the metallic substrate is adjusted to a value in a hydrogen-generating region, so that the surface of the metallic substrate is clarified with nascent hydrogen.

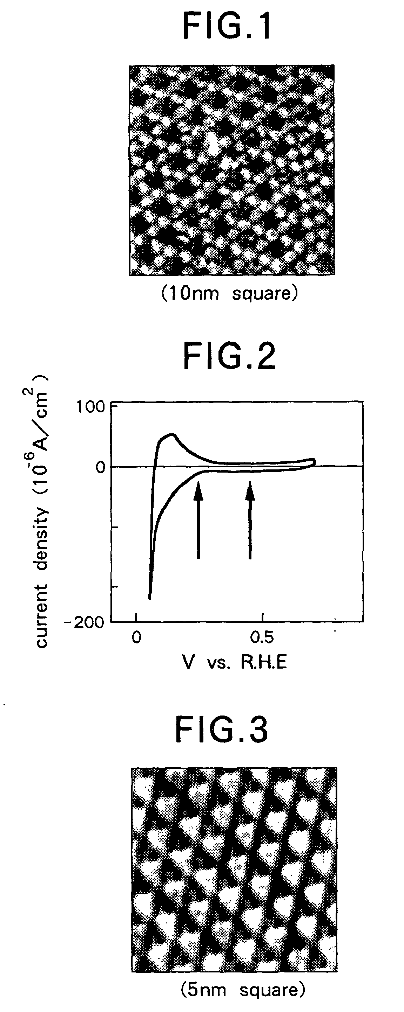

The potential to clarify the surface is varied in response to the kinds of metal and electrolytic material. For example, in the case of (111) oriented crystalline Rh in a 10 mM pure hydrofluoric acid, nascent hydrogen is generated at a potential lower than 0.2 V vs.R.H.E (versus Reversible Hydrogen Electrode) as shown in Fig. 2. Therefore, a potential lower than 0.2 V vs.R.H.E. applied to the metallic substrate, which is clarified. However, the potential is adjusted at a value higher than 0.1 V vs.R.H.E. since an excessively low potential causes violent generation of hydrogen which results in rough surface of metal.

The potential of the metallic substrate is then changed to a value suitable for fabrication of a monomolecular film having objective structure, which is pre-confirmed by STM or the like. At this potential, adsorption and desorption speeds of the organic molecule added to the electrolyte solution are well balanced with each other after the lapse of a predetermined time. When the adsorption speed is balanced with the desorption speed, electrochemical equilibrium is established between the organic molecule and the metallic substrate, and the thin film is formed to monomolecular structure.

In a conventional vacuum deposition method, either an adsorption film at a ratio less than a monomolecular film or a molecule-multilayered film may be fabricated by controlling a supply amount of an organic compound. On the other hand, a monomolecular film is instantaneously, formed in a wet process using a solution of ordinary concentrations. Such formation of a monomolecular film is due to an effect of hydrogen ions co-existing in the solution which inhibit chemical adsorption in an amount exceeding a monomolecular film. In this sense, potentiometric control of reaction with hydrogen ions effectively inhibits deposition of the organic compound in multilayered state and promotes growth of a monomolecular film.

In the same meaning, the metallic substrate may be precoated with an additional organic film to moderate adsorption of the organic compound thereon. The additional organic film may be of an amphiphilic organic compound that has hydrophilic and hydrophobic groups in one molecule. As amphiphilic organic compounds, those aromatic hydrocarbons are typically pointed out which have hydrocarbon groups or halogen substituted hydrocarbon groups as a hydrophobic group, and have at least one of -SO₃H, -SO₃M, -OSO₃M, -COOM, -NR₃X, -COOH, -NH₂, -CN, -OH, -NHCONH₂, -(OCH₂CH₂)ₙ, -CH₂OCH₃, -OCH₃, -COOH₃ and -CS as a hydrophilic group (where R represents an alkyl group, M represents an alkali metal or -NH₄ and X represents a halogen).

When an organic monomolecular film is fabricated by adsorption of the above defined organic compound onto a metallic substrate, structure of molecular arrays in the organic film may be varied even in the same organic compound by selection of the metallic substrate. For instance, when a pure metal belonging to Group-VIII whose surface exhibits strong interaction to an organic molecule is used as a metallic substrate, a uniform monomolecular adsorption film in which molecular constituents are arranged with good orientation is easily fabricated.

Some structures of molecular arrays are often realized even in combination of the same substrate with the same compound. However, since a free energy for forming structure of molecular arrays is different from each other, an organic film having specified single structure is predominantly grown up by applying a potential corresponding to the free energy for forming said specified structure.

### Example 1:

A Pt piece having (111) single crystalline plane was used as a metallic substrate. The metallic substrate was cleaned and immersed in a 10 mM purified hydrofluoric solution. A potential of 0.18 V vs. R.H.E. in a hydrogen-generating region was applied for 30 seconds to the metallic substrate to clarify the surface of the metallic substrate. Thereafter, a small amount of an aqueous benzene solution was added to the hydrofluoric solution, under condition that the metallic substrate was held at a controlled potential. The additive benzene was adsorbed onto the metallic substrate and grown up to a monomolecular thin film.

When the obtained benzene monomolecular film was observed by STM, it was recognized that the film had orientation varied in response to a potential of the metallic substrate. When the metallic substrate was held at 0.25 V vs. R.H.E. (a reversible hydrogen electrode as a reference), the benzene film was of (√21×√21) structure corresponding to a hexagonal lattice, as shown in Fig. 1. When the metallic substrate was held at 0.35 V vs. R.H.E., the benzene film was of c(2√3×3) structure corresponding to an orthorhombic lattice.

### Example 2:

A pure Rh piece having (111) single crystalline plane was used as a metallic substrate. The metallic substrate was cleaned and immersed in a 10 mM purified hydrofluoric solution. After the surface of the metallic substrate was electrolytically clarified, a small amount of an aqueous benzene solution was added to the hydrofluoric solution under condition that the metallic substrate was held at a controlled potential. Fig. 2 shows a current-potential curve in this solution. The additive benzene was adsorbed onto the metallic substrate and grown up to a monomolecular thin film.

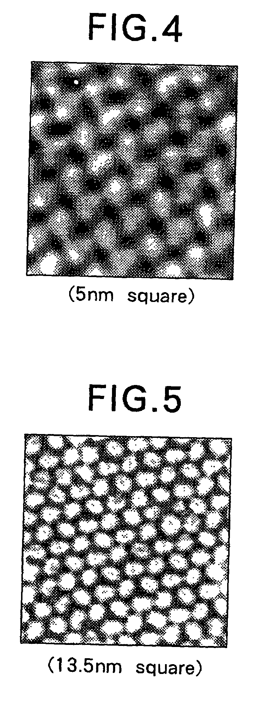

When the obtained benzene monomolecular film was observed by STM, it was recognized that the film had orientation varied in response to a potential of the metallic substrate. When the metallic substrate was held at 0.25 V vs. R.H.E., the benzene film was of (3×3) structure corresponding to a hexagonal lattice, as shown in Fig. 3. When the metallic substrate was held at 0.45 V vs. R.H.E., the benzene film was of c (2√3×3) structure corresponding to an orthorhombic lattice, as shown in Fig. 4.

When results in Example 2 are compared with results in Example 1, it is noted that a film of (√21×√21) structure was grown in Example 1 using a Pt substrate, while a film of (3×3) structure was grown in Example 2 using a Rh substrate, although the same lower potential 0.25 V vs. R.H.E. was applied to the metallic substrates. The difference means the structure of the film can be changed by selecting the kind of the metallic substrate in the case using the same organic substance benzene.

### Example 3:

A pure Rh piece having (111) single crystalline plane was used as a metallic substrate. The metallic substrate was cleaned and immersed in a 10 mM purified hydrofluoric solution. After the surface of the metallic substrate was electrolytically clarified, a small amount of an aqueous naphthalene solution was added to the hydrofluoric solution under condition that the metallic substrate was held at a controlled potential. The additive naphthalene was adsorbed onto the metallic substrate and grown up to a monomolecular film.

The monomolecular film grown at a potential of 0.25 V vs. R.H.E. was of (3√3 ×3 √3) structure, as shown in Fig. 5. This structure had peculiar features that naphthalene molecules composed a plurality of rows extending in parallel to each other and that naphthalene molecules in each row were oriented with a rotation angle of 120 degrees per every molecule.

According to the present invention as aforementioned, the above defined organic compound dissolved in an electrolyte solution is adsorbed onto a metallic substrate which is a single crystalline plane and grown up to an organic film having orientation or structure controlled at a molecular level under condition that the metallic substrate is held at a controlled potential. An obtained monomolecular film is improved in orientation by selecting a kind of the metallic substrate as well as controlling a potential of the metallic substrate serving as an electrode. In case where monomolecular films different in structure from each other are grown from the same organic molecule, a film of specified structure can be preferentially fabricated by selection of the metallic substrate as well as control of an electrode potential. Since the organic monomolecular film obtained in this way is of highly-oriented structure, it is useful as a functional film such as a liquid-crystalline oriented film, a photo-electric transfer element, a nonlinear optical element or a sensor.

## Claims

1. A method of fabricating an organic monomolecular film having orientation or structure controlled at a molecular level, comprising the steps of:
applying a potential at a value in a hydrogen generating region to a metallic substrate immersed as an electrode in an electrolyte solution dissolving an organic compound therein;
changing said potential at a value to hold an electrochemical equilibrium between said organic compound and said metallic substrate; and
adsorbing said organic compound as an organic monomolecular adsorption film onto said metallic substrate, wherein the organic compound is selected from the group consisting of aromatic hydrocarbon, carboxylic acid, phenol and N-containing heterocyclic compound, and wherein the metallic substrate is a single crystalline phase having a single crystalline plane, especially a (111) single crystalline plane.

2. The method of fabricating an organic monomolecular film according to Claim 1, wherein the organic compound is dissolved in the electrolyte solution before immersion of the metallic substrate.

3. The method of fabricating an organic monomolecular film according to Claim 1, wherein the organic compound is added in the electrolyte solution after immersion of the metallic substrate.

4. The method of fabricating an organic monomolecular film according to Claim 1, 2 or 3, wherein the metallic substrate is one precoated with an additional organic film.

## Patentansprüche

1. Verfahren zur Herstellung eines monomolekularen organischen Films mit auf einem molekularen Niveau kontrollierter Orientierung oder Struktur, umfassend die Schritte:
Anlegen eines Potentials mit einem Wert in einem Wasserstoff-generierenden Bereich an ein metallisches Substrat, das als eine Elektrode in eine Elektrolytlösung mit einer darin gelösten organischen Verbindung eingetaucht ist,
Ändern des Potentials mit einem Wert, um ein elektrochemisches Gleichgewicht zwischen der organischen Verbindung und dem metallischen Substrat zu halten, und
Adsorbieren der organischen Verbindung als ein monomolekularer organischer Adsorptionsfilm auf dem metallischen Substrat, wobei die organische Verbindung aus der Gruppe, bestehend aus einem aromatischen Kohlenwasserstoff, einer Carbonsäure, Phenol und einer N-enthaltenden heterocyclischen Verbindung, ausgewählt ist, und wobei das metallische Substrat eine einkristalline Phase mit einer Einkristallebene, insbesondere eine (111) Einkristallebene, ist.

2. Verfahren zur Herstellung eines monomolekularen organischen Films nach Anspruch 1, wobei die organische Verbindung vor Eintauchen des metallischen Substrats in der Elektrolytlösung gelöst wird.

3. Verfahren zur Herstellung eines monomolekularen organischen Films nach Anspruch 1, wobei die organische Verbindung nach Eintauchen des metallischen Substrats in die Elektrolytlösung zugegeben wird.

4. Verfahren zur Herstellung eines monomolekularen organischen Films nach Anspruch 1, 2 oder 3, wobei das metallische Substrat ein mit einem zusätzlichen organischen Film vorbeschichtetes metallisches Substrat ist.

## Revendications

1. Procédé de fabrication d'un film monomoléculaire organique présentant une orientation ou une structure commandée à un niveau moléculaire, comprenant les étapes de :
application d'un potentiel à une certaine valeur dans une zone de production d'hydrogène sur un substrat métallique immergé en tant qu'électrode dans une solution d'électrolyte à l'intérieur de laquelle est dissous un composé organique ;
modification dudit potentiel à une valeur permettant de maintenir un équilibre électrochimique entre ledit composé organique et ledit substrat métallique ; et
adsorption dudit composé organique sous la forme d'un film d'adsorption monomoléculaire organique sur ledit substrat métallique, dans lequel le composé organique est sélectionné à partir du groupe constitué par les hydrocarbures aromatiques, l'acide carboxylique, le phénol et les composés hétérocyclique contenant de l'azote (N), et dans lequel le substrat métallique est une phase monocristalline comportant un plan monocristallin, en particulier, un plan monocristallin (111).

2. Procédé de fabrication d'un film monomoléculaire organique selon la revendication 1, dans lequel le composé organique est dissous dans la solution électrolyte avant immersion du substrat métallique.

3. Procédé de fabrication d'un film monomoléculaire organique selon la revendication 1, dans lequel le composé organique est ajouté dans la solution électrolyte après immersion du substrat métallique.

4. Procédé de fabrication d'un film monomoléculaire organique selon la revendication 1, 2 ou 3, dans lequel le substrat métallique est préalablement revêtu avec un film organique supplémentaire.
